(19)

Europäisches Patentamt
European Patent Office
Office européen des brevets

(11) **EP 3 451 037 A1**

(12) **EUROPEAN PATENT APPLICATION**
published in accordance with Art. 153(4) EPC

(43) Date of publication:
06.03.2019 Bulletin 2019/10

(21) Application number: 17814926.6

(22) Date of filing: 15.02.2017

(51) Int Cl.:
*G02B 6/46* (2006.01)    *G02B 6/44* (2006.01)
*G02B 6/48* (2006.01)

(86) International application number:
**PCT/JP2017/005505**

(87) International publication number:
**WO 2017/221454 (28.12.2017 Gazette 2017/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  23.06.2016  JP 2016124561

(71) Applicant: **Fujikura Ltd.**
**Tokyo 135-8512 (JP)**

(72) Inventors:
• **ITO, Naoto**
  **Sakura-shi**
  **Chiba 285-8550 (JP)**
• **OSATO, Ken**
  **Sakura-shi**
  **Chiba 285-8550 (JP)**

(74) Representative: **Osha Liang**
**2, rue de la Paix**
**75002 Paris (FR)**

(54) **METHOD FOR GRIPPING OPTICAL FIBER CABLE, AND OPTICAL FIBER CABLE GRIPPING TOOL**

(57)    In anchoring a supporting wire made of a material other than metal, a so-called nonmetallic material, to a utility pole or the like, there is a possibility of breakage of the supporting wire when an outer sheath covering the supporting wire is stripped off to grip the supporting wire or is wound around and locked to a metal anchor. The present invention is a method for gripping an optical fiber cable by using a gripping member, the optical fiber cable including a main body part including an optical fiber and a supporting wire part. The supporting wire part includes a supporting wire made of a material other than metal and an outer sheath covering the supporting wire. The gripping member grips the supporting wire by tightening the gripping member around the supporting wire part while the supporting wire remains covered with the outer sheath.

FIG. 5A

EP 3 451 037 A1

2(5,6A)

12C
12A

12B

FIG. 5B

12A
12B
12C

2(5,6A)

FIG. 5C

## Description

Technical Field

The present invention relates to a method for gripping an optical fiber cable and an optical fiber cable gripping tool.

Background Art

Recent years have seen the widespread use of fiber to the home (FTTH) services for providing high-speed communication services by directly connecting communication providers and subscribers via optical fibers. As an optical fiber cable extended from a communication provider and installed so as to bridge utility poles, an aerial optical fiber cable installed with a supporting wire anchored to utility poles or the like is known.

Relating to such an optical fiber cable, Patent Literature 1 discloses an optical fiber cable having a self-supporting structure with a supporting wire formed using a steel wire and further covered with an outer sheath. Moreover, Patent Literature 2 discloses a technique for locking, using S metal fitting having a function of anchoring an aerial optical fiber cable, an end of a supporting wire separated from the optical fiber cable to an anchor of the S metal fitting by winding the end portion around the anchor in a crossed manner.

Citation List

Patent Literature

Patent Literature 1: JP 2014-219494A
Patent Literature 2: JP 2000-41325A

Summary of Invention

Technical Problem

For the purpose of suppressing electromagnetic induction, there is a growing demand for the introduction of supporting wires made of a material other than metal, a so-called nonmetallic material, in place of steel wires as used in Patent Literature 1. In the case of a supporting wire using a steel wire, the supporting wire is anchored to utility poles or the like by stripping an outer sheath covering the supporting wire off. However, in the case of a nonmetallic material supporting wire, there is a possibility of breakage of the supporting wire when a gripping tool for anchoring the supporting wire comes directly into contact with the supporting wire, and hence an anchoring method as that described above has not been employed. Moreover, in a case of locking a nonmetallic material supporting wire by winding the supporting wire around an anchor of S metal fitting as in Patent Literature 2, there is a possibility of fracture of the supporting wire. In view of these, there is a need for a method for anchoring a nonmetallic material supporting wire while suppressing breakage of the supporting wire.

An objective of the present invention is to anchor a nonmetallic material supporting wire while suppressing breakage of the supporting wire.

Solution to Problem

A primary aspect of the invention for achieving the aforementioned objective is a method for gripping an optical fiber cable by using a gripping member, the optical fiber cable including a main body part including an optical fiber and a supporting wire part, the supporting wire part including a supporting wire made of a material other than metal and an outer sheath covering the supporting wire, the method including gripping the supporting wire part by tightening the gripping member around the supporting wire part while the supporting wire remains covered with the outer sheath.

Other features of the present invention are made clear by the following description and the drawings.

Advantageous Effects of Invention

With the present invention, it is possible to anchor a nonmetallic material supporting wire while suppressing breakage of the supporting wire.

Brief Description of Drawings

Fig. 1 is a cross-sectional view of an optical fiber cable 1.
Fig. 2 is a diagram schematically illustrating a gripping structure of the optical fiber cable 1 according to a first embodiment of the present invention.
Fig. 3 is a cross-sectional view of a gripping part 11 seen in a longitudinal direction of a supporting wire part 2.
Fig. 4 is a diagram for illustrating a detailed structure of gripping grips 12.
Fig. 5A to Fig. 5C are diagrams illustrating a method for winding the gripping grips 12 illustrated in Fig. 4 around the supporting wire part 2.
Fig. 6A and Fig. 6B are diagrams schematically illustrating a gripping structure of an optical fiber cable 1 according to a second embodiment of the present invention.
Fig. 7A is a diagram illustrating a structure of an end portion gripping grip 19 according to the second embodiment of the present invention. Fig. 7B is a diagram illustrating a detailed structure of the end portion gripping grip 19 in the case of gripping a leading supporting wire 18.
Fig. 8A illustrates a longitudinal-direction cross-sectional view with no tension being applied in the case of gripping a supporting wire part by using a gripping grip. Fig. 8B illustrates a longitudinal-direction cross-sectional view in a case that tension is applied and hence separation occurs at an interface.

Fig. 9 is a diagram for explaining a test mechanism 21 for measuring adhesion force of an outer sheath and a supporting wire.

Description of Embodiments

At least the following matters are made clear from the following description and the drawings.

Disclosed is a method for gripping an optical fiber cable by using a gripping member, the optical fiber cable including a main body part including an optical fiber and a supporting wire part, the supporting wire part including a supporting wire made of a material other than metal and an outer sheath covering the supporting wire, the method including gripping the supporting wire part by tightening the gripping member around the supporting wire part while the supporting wire remains covered with the outer sheath. With such a method for gripping an optical fiber cable, it is possible to anchor the nonmetallic material supporting wire while suppressing breakage of the supporting wire.

It is preferable that the gripping member is tightened by being wound around the supporting wire part in a spiral shape. In this way, it is possible for the gripping member to grip the supporting wire part more tightly.

It is preferable that the supporting wire is made of glass fiber reinforced plastic. The method is particularly advantageous in such a case.

It is preferable that a non-slip material is provided between the gripping member and the outer sheath. In this way, the gripping member comes off less easily in a state of the gripping member gripping the supporting wire part.

It is preferable that the gripping member grips the supporting wire part by being tightened around the supporting wire part to a degree not to squeeze the outer sheath. In this way, it is possible to suppress breakage of the supporting wire due to the outer sheath being squeezed.

It is preferable that neck parts are provided intermittently, each of the neck parts being formed by the outer sheath integrally covering the main body part and the supporting wire to couple the main body part and the supporting wire together. In this way, it is possible to suppress breakage of the supporting wire due to wind load even in aerial environment with a long span.

It is preferable that the supporting wire part is gripped at a fixed structure by a separated part not coupling the main body part and the supporting wire part. In this way, only a supporting wire is gripped, and hence it is possible to suppress breakage of the optical fiber in the main body part.

It is preferable that the main body part is sagging down with respect to the supporting wire part. In this way, even when tensile force is applied to the supporting wire, it is possible to suppress breakage of the optical fiber.

It is preferable that, given that a diameter of the supporting wire is D, adhesion force F of the outer sheath and the supporting wire is 1.77$\pi$D [N/mm] or greater. In this way, even when tensile force is applied to the supporting wire in aerial environment, it is possible to suppress occurrence of separation of the outer sheath and the supporting wire at a boundary face.

{First Embodiment}

Basic Structure of Optical Fiber Cable 1:

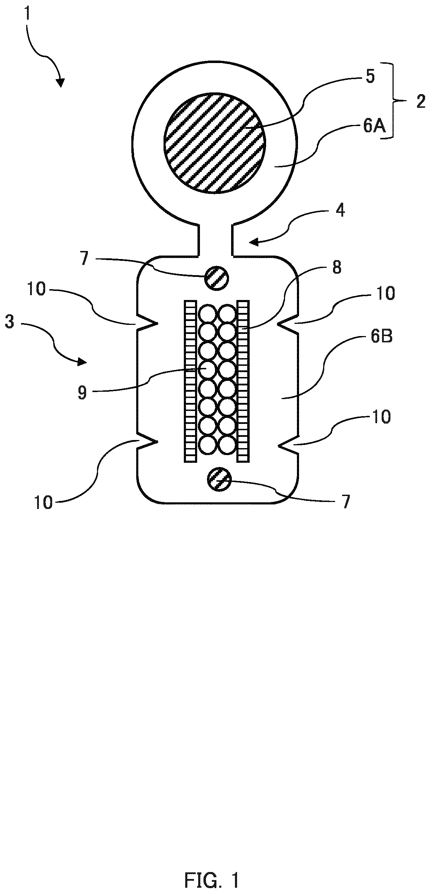

Fig. 1 is a cross-sectional view of an optical fiber cable 1. The optical fiber cable 1 is an aerial optical fiber cable having a self-supporting structure and being used in the case of installing the optical fiber cable 1 to bridge utility poles in FTTH. Alternatively, the optical fiber cable 1 may be an optical fiber drop cable branching off from an aerial optical fiber cable and leading an optical fiber(s) to a subscriber' s house. The optical fiber cable 1 includes a supporting wire part 2, a main body part 3, and a neck part 4. The optical fiber cable 1 has a structure in which the supporting wire part 2 and the main body part 3 are coupled together with the neck part 4 provided therebetween.

The supporting wire part 2 is an aerial hanger wire. The supporting wire part 2 includes a supporting wire 5 and an outer sheath 6A.

The supporting wire 5 is formed of a material other than metal, i.e., a so-called nonmetallic material. As a nonmetallic material, fiber reinforced plastic (FRP), such as glass fiber reinforced plastic (GFRP), aramid fiber reinforced plastic reinforced with Kevlar (registered trademark) (KFRP), or polyethylene fiber reinforced plastic reinforced with polyethylene fibers, or the like, for example. Alternatively, a combination of a fibrous tensile member, such as glass fibers, aramid fibers, or polyethylene fibers, and any of the above-described kinds of fiber reinforced plastic (FRP), may be used.

The outer sheath 6A is a covering material covering the supporting wire 5. The outer sheath 6A is formed of thermoplastic resin. As the thermoplastic resin, a material generally used for an optical fiber cable, such as a polyethylene, polypropylene, polystyrene, or polyvinyl chloride, is used, for example.

The main body part 3 includes optical fibers 9, a pair of tensile members 7, a pair of separators 8, and an outer sheath 6B. The optical fibers 9, the pair of tensile members 7, and the pair of separators 8 are arranged in a positional relationship as illustrated in Fig. 1. The optical fibers 9 and the pair of tensile members 7 are arranged in parallel with each other in a longitudinal direction. Note that the structure of the main body part 3 is not limited to this as long as the optical fibers 9 are included.

The optical fibers 9 are optical signal transmission lines, and optical fiber is a generic term for a secondary coated optical fiber, a primary coated optical fiber, an optical fiber cord, and the like. The optical fibers 9 may be formed using an intermittently connected optical fiber ribbon. Thus, intermittently connected optical fiber ribbons can be rolled up into a cylindrical form (a bundle), or folded up, and the multitude of optical fibers 9 can be bundled with high density. Furthermore, using such an intermittently connected optical fiber ribbon makes it easy for one or a plurality of optical fibers to be extracted in mid-span branching.

The pair of tensile members 7 has a function of resisting tension applied in the longitudinal direction of the optical fibers 9, to prevent the optical fibers 9 from being stretched more than necessary. The pair of tensile members 7 is arranged on the outer sides of right and left ends of the pair of separators 8. The pair of tensile members 7 may be formed of the same nonmetallic material as that of the supporting wire 5 or may be formed using steel wires.

The pair of separators 8 has a function of separating the optical fibers 9 and the outer sheath 6B. The pair of separators 8 surrounds the optical fibers 9 to prevent the material of the outer sheath 6B from adhering to the optical fibers in a process of manufacturing the optical fiber cable 1. The pair of separators 8 is formed of a material having a melting point higher than that of the material of the outer sheath 6B. As the material of the pair of separators 8, a nylon flat string is used, for example. This prevents the optical fibers 9 from being thermally fused with the material of the outer sheath 6B even in the case of extrusion covering by extruding the material of the outer sheath 6B to cover the optical fibers 9, the pair of tensile members 7, and the pair of separators 8.

The outer sheath 6B may be formed of the same material as that of the outer sheath 6A or may be formed of a different material.

As illustrated in Fig. 1, the cross sectional shape of the main body part 3 including the outer sheath 6B is substantially rectangular. The main body part 3 includes, at each long side of the rectangle, notches 10 each formed to have a V-shaped cross section. Two notches 10 are formed at each side.

The notches 10 are provided so as to make it easy to extract the optical fibers 9 by splitting and cutting the main body part 3. Although the notches 10 are not necessarily formed in the main body part 3, the notches 10 are preferably formed.

The supporting wire part 2 and the main body part 3 can be separated by cutting the neck part 4. The neck part 4 can be formed of the same material as that of the outer sheath 6A and the outer sheath 6B. Alternatively, the neck part 4, the outer sheath 6A, and the outer sheath 6B may be integrally formed of the same material.

Note that the optical fiber cable 1 is not limited to the above-described structure and may be any of various structures. For example, the optical fibers 9 may include 8 cores to 48 cores or may include 48 cores or more.

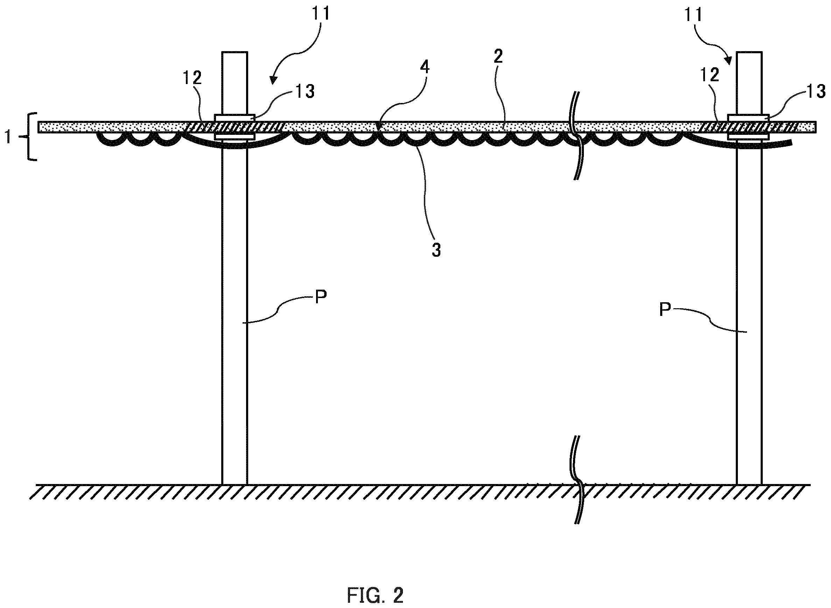

Gripping Structure of Optical Fiber Cable 1: Fig. 2 is a diagram schematically illustrating a gripping structure of the optical fiber cable 1 according to the first embodiment of the present invention. Described below is a structure for gripping the optical fiber cable 1 at utility poles P to install the optical fiber cable 1 to bridge the utility poles with a long span.

The supporting wire part 2 and the main body part 3 are coupled with a plurality of neck parts 4 provided intermittently in the longitudinal direction. As described above, the coupling with the neck parts 4 may be provided by integrally forming the neck parts 4, the outer sheath 6A, and the outer sheath 6B of the same material to couple the supporting wire part 2 and the main body part 3. At a portion between each paired adjacent neck parts 4 and 4, the support wire part 2 and the main body part 3 are separated. At each position where the supporting wire part 2 and the main body part 3 are separated, a gripping part 11 is provided to grip only the supporting wire part 2 at the corresponding utility pole P.

At each position where the supporting wire part 2 and the main body part 3 are separated, the main body part 3 is provided in such a manner as to sag down with respect to the supporting wire part 2 forming a serpentine course. This forms a space between the supporting wire part 2 and the main body part 3, which can reduce the wind load imposed on the entire optical fiber cable 1.

An example of the optical fiber cable 1 includes the neck parts 4 each being 40 mm in length and the separated sections each being 250 mm or 550 mm in length (pitch of the neck parts 4) in the longitudinal direction of the supporting wire part, with the distance between the utility poles on the order of several meters to 50 m. Note that, however, these values may be appropriately changeable by taking account of usage environment, such as the wind load imposed on the optical fiber cable 1.

The gripping part 11 includes a gripping grip 12 and a fixing member 13. The gripping part 11 has a structure in which the gripping grip 12 grips the supporting wire part 2 and the fixing member 13 fixes the supporting wire part 2 gripped by the gripping grip 12 to the corresponding utility pole P.

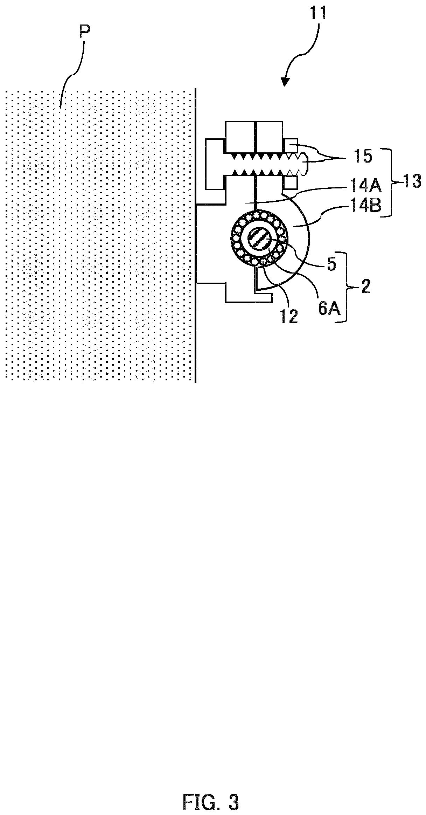

Fig. 3 is a cross-sectional view of the gripping part 11 seen in the longitudinal direction of the supporting wire part 2. The fixing member 13 included in the gripping part 11 includes a pair of covers 14A and 14B and a fixture 15 (bolt and nut).

The cover 14A is firmly fixed to the utility pole P. The cover 14A and the cover 14B are provided so as to cover the supporting wire unit 2 and the gripping grip 12 and are fastened to each other by the fixture 15. In this way, the supporting wire part 2 and the gripping grip 12 are fixed to the utility pole P.

The gripping grip 12 is provided to grip the supporting wire part 2 and wind around the circumference of the supporting wire part 2. A detailed structure of the gripping grip 12 will be described later. Here, the gripping grip 12 is attached to the circumference of the supporting wire part 2 with the supporting wire 5 remaining covered with the outer sheath 6A. This can prevent damage to a surface of the supporting wire 5 due to the gripping grip 12 being directly attached to the supporting wire 5 not covered with the outer sheath 6A. Hence, it is possible to anchor the nonmetallic material supporting wire 5 while suppressing breakage of the supporting wire 5. In addition, since there is no need to strip off the outer sheath 6A, different from the case of anchoring a supporting wire of a steel wire, it is possible to perform an anchoring operation efficiently.

To prevent damage to the surface of the supporting wire 5, the pressure force of the gripping grip 12 is preferably adjusted to such an extent as to cause no squeezing (including breakage) of the outer sheath 6A.

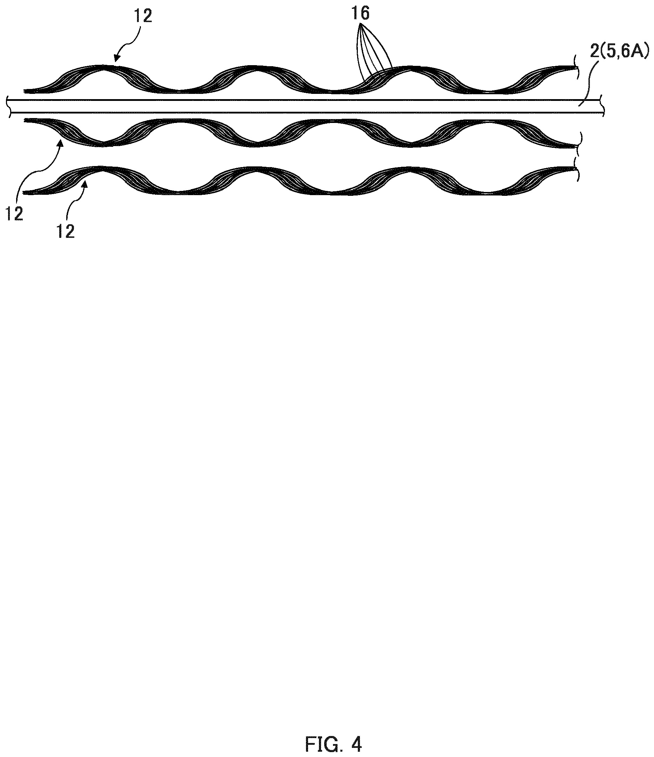

Fig. 4 is a diagram for illustrating a detailed structure of gripping grips 12. In the present embodiment, a structure in which three gripping grips 12 are wound around the supporting wire part 2 in a spiral shape to grip the supporting wire part 2 is shown. Note that the number of gripping grips 12 for gripping the one supporting wire part 2 is not intended to be limited to three and may be any other number.

Each gripping grip 12 includes a plurality of wires 16. For each wire 16, a galvanized steel wire, a zinc-aluminum alloy plated steel wire, or the like is used. The plurality of wires 16 are placed side by side, bonded to each other, and further wound in a spiral shape. A friction material for increasing frictional force may be applied to surfaces, of the plurality of wires 16 wound in a spiral shape, that are to come in contact with the supporting wire part 2. As the friction material, fine-grained sand, grains of glass, or the like, for example may be used.

Each gripping grip 12 illustrated in Fig. 4 includes five wires. However, the number of wires constituting the gripping grip is not intended to be limited to five, and the gripping grip 12 may be constituted of one flat wire.

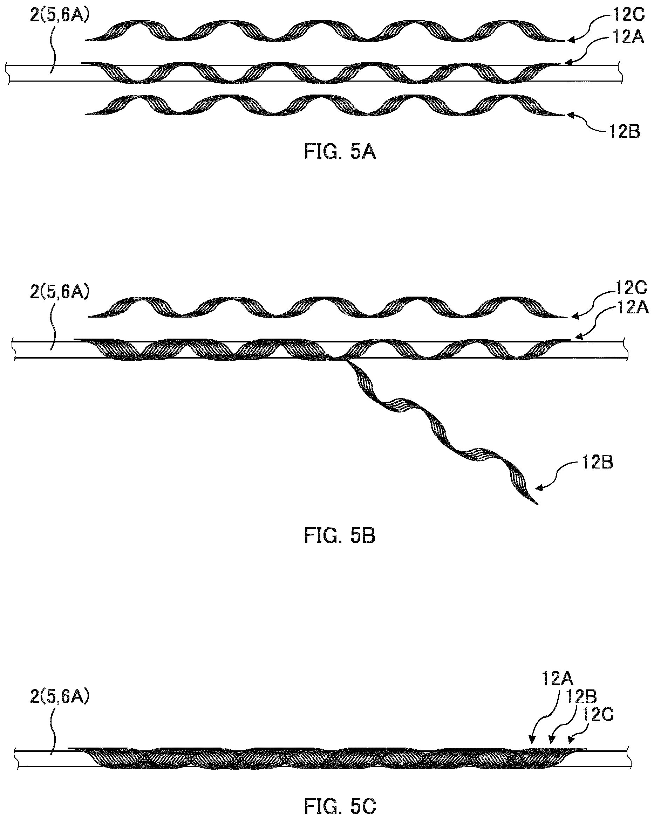

Fig. 5A to Fig. 5C are diagrams illustrating a method for winding the gripping grips 12 illustrated in Fig. 4 around the supporting wire part 2. In the following description, the gripping grips 12 may be distinguished from each other based on alphabets (A to C) attached to the gripping grips 12 for explanation.

First, as illustrated in Fig. 5A, the gripping grip 12A is wound around the supporting wire part 2 separated from the main body part 3. In this stage, the gripping grip 12A is wound while the winding pitch for the gripping grip 12A is adjusted, so as to keep spaces for the gripping grip 12B and the gripping grip 12C to be wound later.

Next, as illustrated in Fig. 5B, the gripping grip 12B is wound to be adjacent to the gripping grip 12A. Fig. 5B presents a state halfway through the winding of the gripping grip 12B.

Subsequently, as illustrated in Fig. 5C, the gripping grip 12C is wound to be adjacent to the gripping grip 12B. The gripping grip 12A to the gripping grip 12C are tightened by being pulled to opposite ends thereof to be stretched and thereby grip the supporting wire part 2. Finally, the gripping grips 12A to the gripping grip 12C are fixed to the supporting wire part 2 with an unillustrated fixing member, such as a tape.

For the above-described gripping part 11, a description has been given of the method for tightening the gripping grips 12 around the supporting wire part 2 by winding the gripping grips 12 around the supporting wire part 2 in a spiral shape. The tightening method is not limited to this, however, and may be longitudinal tightening or tightening with winding in a manner different from a spiral shape.

{Second Embodiment}

Gripping Structure of Optical Fiber Cable 1 (Another Example):
For the optical fiber cable 1 of the first embodiment, a description has been given of the case where the supporting wire part 2 is gripped at each utility pole in installing the optical fiber cable 1 to bridge the utility poles. For an optical cable described in the present embodiment, it is possible to grip the optical fiber cable in a similar method even in the case of the optical fiber cable being an optical fiber drop cable for branching the optical fiber cable to be led to a subscriber's house or the like.

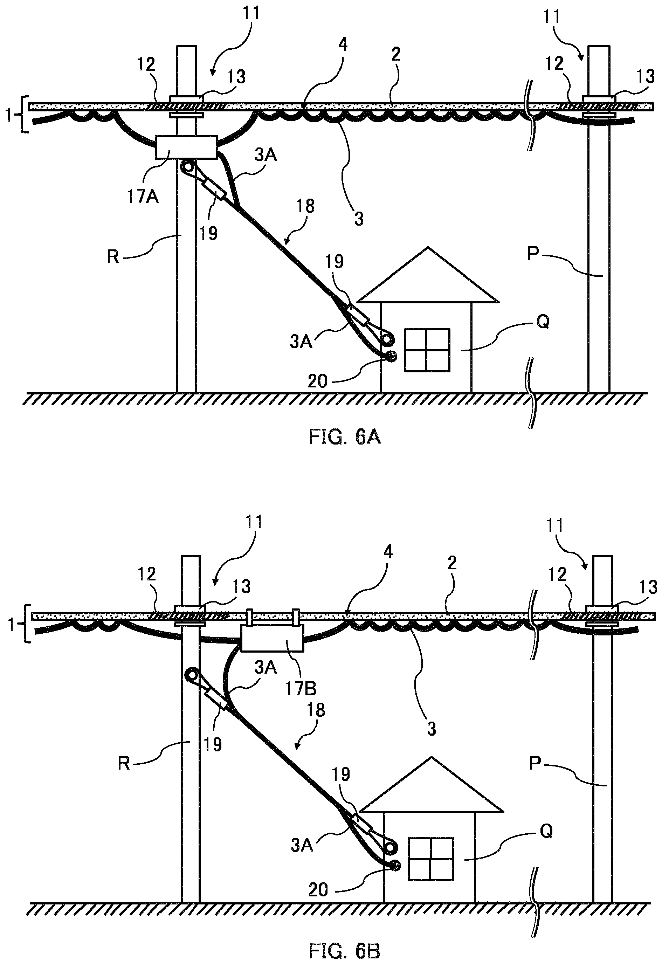

Fig. 6A and Fig. 6B are diagrams schematically illustrating gripping structures of an optical fiber cable 1 according to the second embodiment of the present invention. Fig. 6A is a diagram for illustrating a case of branching optical fiber(s) in a utility pole mounted type branch closure 17A and leading the optical fiber (s) to a subscriber's house Q. Meanwhile, Fig. 6B is a diagram for illustrating a case of branching optical fiber(s) in a supporting wire hanging type branch closure 17B and leading the optical fiber(s) to the subscriber's house Q.

In Fig. 6A, the branch closure 17A is provided to a utility pole R. The branch closure 17A is an enclosure that, in the case of connecting, branching, pulling down, and the like an optical fiber cable, anchors the optical fiber cable therein and accommodates a connecting point. In the optical fiber cable 1 described in the present embodiment, optical fibers 9 of a main body part 3 are partially branched in the branch closure 17A, and the branched part is led as a new main body part 3A into the subscriber's house Q.

After the branching, the main body part 3A is led, while being supported by a leading supporting wire 18, to the subscriber's house Q through a leading hole 20 formed at the subscriber's house Q. The leading supporting wire 18 is, as the supporting wire part 2 described above (first embodiment), formed with a supporting wire formed of a nonmetallic material and further covered with an outer sheath (not illustrated) . The leading supporting wire 18 is anchored by end portion gripping grips 19, and one end of the leading supporting wire 18 is fixed to the utility pole R while the other end of the leading supporting wire 18 is fixed to a wall of the subscriber's house Q.

In Fig. 6B, the branch closure 17B is provided to the supporting wire part 2. Other parts of the structure are similar to those described in Fig. 6A.

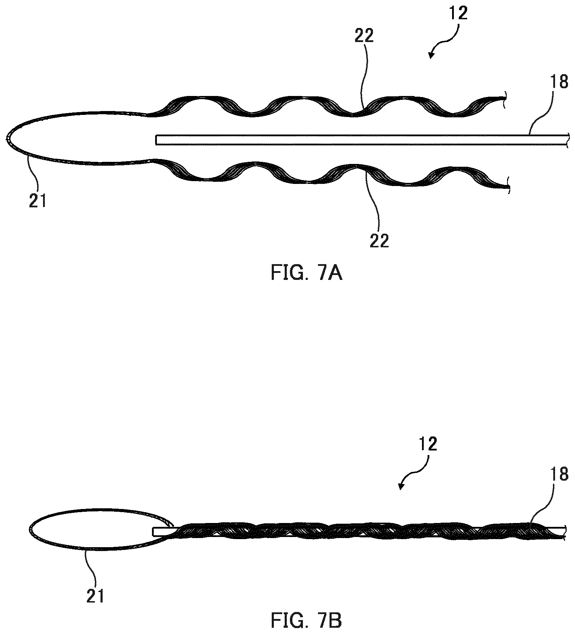

Fig. 7A is a diagram illustrating a structure of the end portion gripping grip 19 according to the second embodiment of the present invention. The end portion gripping grip 19 includes a folded portion 21 and two grip portions 22. The two grip portions 22 are formed by being coupled to each other with the folded portion 21.

Fig. 7B is a diagram illustrating a detailed structure of the end portion gripping grip 19 in the case of gripping the leading supporting wire 18. The two grip parts 19 of the gripping grip 12 are wound around the leading supporting wire 18 in a spiral shape to grip the leading supporting wire 18. A winding method is similar to that described with reference to Fig. 5A to Fig. 5C (first embodiment). The loop formed by the folded portion 21 is, for example, hooked to an anchor firmly fixed to the utility pole R or the subscriber's house Q to lock the leading supporting wire 18 to the utility pole R. (Refer to Figs. 6A and 6B.)

{Third Embodiment}

In the first embodiment and the second embodiment, descriptions have been given of gripping a supporting wire (supporting wire part) remaining covered with an outer sheath, by using gripping grips. In such a case, however, when tension is applied to the supporting wire part in the longitudinal direction in an aerial environment, separation may occur at a boundary face between the outer sheath and the supporting wire, and the separation may cause breakage of the outer sheath in some cases. This respect will be described below. In the following description, the boundary face between the outer sheath and the supporting wire may be simply referred to as an "interface".

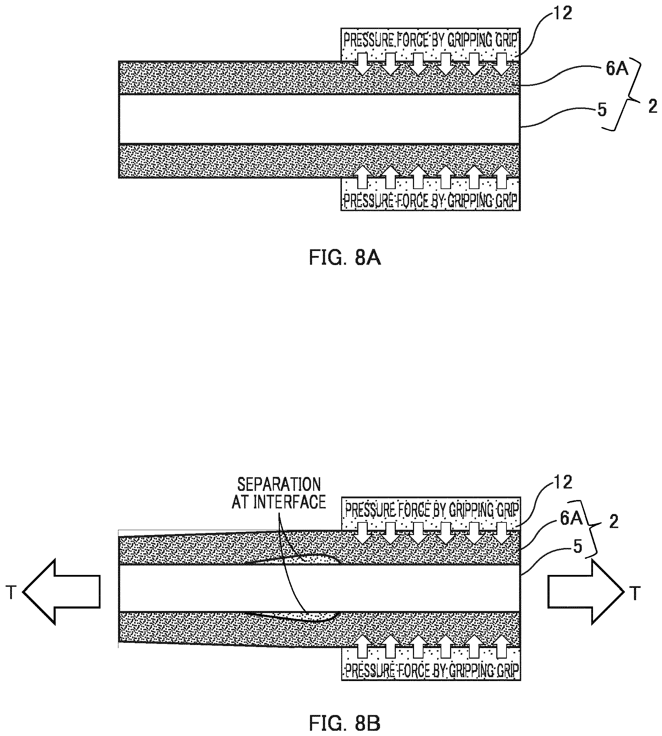

Fig. 8A illustrates a longitudinal-direction cross-sectional view with no tension being applied in the case of gripping a supporting wire part by using a gripping grip. Fig. 8B illustrates a longitudinal-direction cross-sectional view in a case that tension is applied and hence separation occurs at an interface.

First, in a state where no tension is applied, almost no separation occurs at the interface. This is because, although pressure force by the gripping grip 12 is applied to the supporting wire 5 covered with the outer sheath 6A (supporting wire part 2), the force scarcely acts in the direction of separation at the interface.

However, as illustrated in Fig. 8B, tension T is applied in the tension directions of the supporting wire part 2 in the aerial environment. In this state, the outer sheath 6A with which the gripping grip 12 is in contact is pulled in the directions of the tension T and stretches in the longitudinal direction. Consequently, the thickness of the outer sheath 6A is reduced with the stretch, and this acts as force that brings the outer sheath 6A to separate from the supporting wire 5.

Since the gripping grip is not in direct contact with the supporting wire 5, pulling of the supporting wire 5 in the directions of the tension T is not so strong as that for the outer sheath 6A. This causes strain according to the degrees of stretch of the outer sheath 6A and the supporting wire 5. The shear force between the outer sheath 6A and the supporting wire 5 due to the distortion also acts as a force that causes the outer sheath 6A to separate from the supporting wire 5.

In actual aerial environment, the supporting wire part 2 between utility poles forms a line sagging in the gravity direction instead of forming an ideal straight line. In this situation, the above-described force of separation locally appears at portions at or near an area of the supporting wire part 2 to which the pressure force by the gripping grip 12 is applied, and this makes it easier for separation to occur.

In a case that the force of separation exceeds the force of bonding of the outer sheath 6A and the supporting wire 5, separation at the interface occurs. Fig. 8B illustrates a phenomenon in which separation at the interface occurs at or near the area to which the pressure force by the gripping grip 12 is applied.

In the area to which the pressure force by the gripping grip 12 is applied, the pressure force acts in the directions of canceling the force of separation, which prevents the separation at the interface. The portion where the separation at the interface occurs is not always positioned at or near the area to which the pressure force by the gripping grip 12 is applied. There is a possibility that separation at an interface occurs also at any portions in the area to which the pressure force by the gripping grip 12 is not applied.

This separation at the interface causes breakage of the outer sheath 6A. Due to the breakage of the outer sheath 6A, the gripping grip 12 comes in direct contact with the supporting wire 5. Since the supporting wire 5 is formed of a nonmetallic material, such as glass fiber reinforced plastic (GFRP), for example, this contact of the gripping grip 12 easily causes breakage in comparison with the case that the supporting wire 5 is formed using a steel wire or the like.

Evaluation of Adhesion Force of Outer Sheath and Supporting Wire:

In a case that the adhesion force of the outer sheath and the supporting wire is at or smaller than a certain degree, separation at the interface occurs. By taking this into account, first, a plurality of optical fiber cables were created, and the adhesion force of the outer sheath and the supporting wire of each optical fiber cable was measured. Then, a tensile test was carried out with a gripping grip being attached to each optical fiber cable.

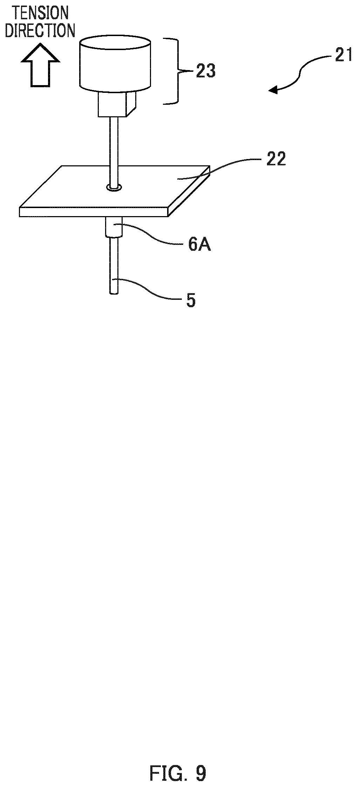

Fig. 9 is a diagram for illustrating a test mechanism 21 for measuring an adhesion force of an outer sheath and a supporting wire. The test mechanism 21 is a mechanism in which part of the supporting wire 5 is covered with the outer sheath 6A, only the supporting wire 5 is pulled with the tension T in the tension direction in Fig. 9 through a fixing plate 22 with a hole, and a load at the time of pulling out is measured by a load cell 23. This load at the time of pulling out is assumed as adhesion force below.

In the adhesion force measurement test, each prototype optical fiber cable had the supporting wire 5 of 4.5 mm in diameter and diameter of the optical fiber cable with the supporting wire 5 covered with the outer sheath 6A was 6.0 mm. The length of the outer sheath 6A for covering in the test mechanism 21 was configured to be 10 mm, and the tensile force with pull-out rate of 50 mm/minute was applied, to measure the load. Moreover, since the adhesion force of the outer sheath 6A and the supporting wire 5 was assumed to be reduced at high temperature, measurement was performed at a plurality of time points in the environment at the air temperature of 85 degree Celsius in the adhesion force measurement test. Table 1 presents the result of the adhesion force measurement test.

[Table 1]

| | [N/10mm] | | | |
|---|---|---|---|---|
| | Time of application in 85° C [hours] | | | |
| | 0 | 100 | 300 | 500 |
| Prototype cable 1 | 463 | 440 | 349 | 328 |
| Prototype cable 2 | 443 | 429 | 375 | 348 |
| Prototype cable 3 | 391 | 276 | 230 | 188 |
| Prototype cable 4 | 327 | 343 | 320 | 282 |
| Prototype cable 5 | 308 | 302 | 260 | 252 |

Five prototype cables were created in total, and the adhesion force was measured using each of the prototype cables in the environment with the air temperature of 85 degrees Celsius at time points after the elapse of 0 hour, 100 hours, 300 hours, and 500 hours. As presented in the result in Table 1, the adhesion force is the smallest at the time point after the elapse of 500 hours for any of the prototype cables, and it is demonstrated that the decrease of the adhesion force of prototype cable 3 in time course among all is significant.

Next, the tensile test was carried out by attaching the gripping grips 12 at both ends of each of the cables same as prototype cables 1 to 5. In the tensile test, the load was measured at the time when exposure of the supporting wire 5 was confirmed due to breakage of the outer sheath 6A. In the following, the load at the time of breakage is assumed as breaking load.

[Table 2]

| | [N/mm] | |
|---|---|---|
| | Time of application in 85° C [hours] | |
| | 0 | 500 |
| Prototype cable 1 | 9853 | 7323 |
| Prototype cable 2 | 9135 | 7251 |
| Prototype cable 3 | 7634 | 3058 |
| Prototype cable 4 | 7036 | 5846 |
| Prototype cable 5 | 6943 | 5321 |

From the result in Table 2, the breaking load of only prototype cable 3 after the elapse of 500 hours is significantly small in comparison with the other prototype cables. Moreover, although the diameter of each prototype cable covered with the outer sheath 6A was designed on the assumption that the maximum wind load (including the time of ice accretion) of approximately 3200 N was to be applied, this breaking load is still small even in consideration of the above . Hence, prototype cable 3 was evaluated as being disqualified, and other prototype cables 1, 2, 4, and 5 were evaluated as being qualified.

The above results in Table 1 and Table 2 demonstrate that the smallest adhesion force among qualified prototype cables 1, 2, 4, and 5 is 252 N / 10 mm (Table 1, the adhesion force of prototype cable 5 after the elapse of 500 hours) . It is apparent that the adhesion force of the outer sheath 6A and the supporting wire 5 depends on the surface area of the supporting wire 5. From these results, provided that the diameter of the supporting wire 5 is D, necessary adhesion force F (N/mm) can be expressed by the following expression.

[Math. 1]

$$F \geq D * \pi * 1.77 \quad (\text{Expression 1})$$

{Other Embodiments}

The above-described embodiments are intended to facilitate the understanding of the present invention and are not to be construed as limiting the present invention. It is apparent that modifications and improvements can be made to the present invention without departing from the gist of the present invention, and equivalents of the present invention are included in the present invention.

Reference Signs List

1: Optical fiber cable;
2: Supporting wire part;
3, 3A: Main body part;
4: Neck part;
5: Supporting wire;
6A, 6B: Outer sheath;
7: Tensile member;
8: Separator;
9: Optical fiber;
10: Notch;
11: Gripping part;
12: Gripping grip;
13: Fixing member;
14: Cover;
15: Fixture;
16: Element wire;
17A, 17B: Branch closure;
18: Leading supporting wire;
19: End portion gripping grip;
20: Leading hole;
21: Test mechanism;
22: Fixing plate with hole;
23: Load cell.

**Claims**

1. A method for gripping an optical fiber cable by using a gripping member, the optical fiber cable including a main body part including an optical fiber and a supporting wire part,
the supporting wire part including a supporting wire made of a material other than metal and an outer sheath covering the supporting wire, the method comprising
gripping the supporting wire part by tightening the gripping member around the supporting wire part while the supporting wire remains covered with the outer sheath.

2. The method for gripping the optical fiber cable according to claim 1, wherein the gripping member is tightened by being wound around the supporting wire part in a spiral shape.

3. The method for gripping the optical fiber cable according to claim 1, wherein the supporting wire is made of glass fiber reinforced plastic.

4. The method for gripping the optical fiber cable according to claim 1, wherein a friction material is provided between the gripping member and the outer sheath.

5. The method for gripping the optical fiber cable according to claim 1, wherein the gripping member grips the supporting wire part by being tightened around the supporting wire part to a degree not to squeeze the outer sheath.

6. The method for gripping the optical fiber cable according to claim 1, wherein neck parts are provided intermittently, each of the neck parts being formed by the outer sheath integrally covering the main body part and the supporting wire to couple the main body part and the supporting wire together.

7. The method for gripping the optical fiber cable according to claim 5, wherein the supporting wire part is gripped at a fixed structure by a separated part not coupling the main body part and the supporting wire part.

8. The method for gripping the optical fiber cable according to claim 6, wherein the main body part is sagging down with respect to the supporting wire part.

9. The method for gripping the optical fiber cable according to claim 1, wherein
given that a diameter of the supporting wire is D, adhesion force F of the outer sheath and the supporting wire is $1.77nD$[N/mm] or greater.

FIG. 1

FIG. 2

EP 3 451 037 A1

FIG. 3

FIG. 4

2(5,6A)

12C
12A

12B

FIG. 5A

2(5,6A)

12C
12A

12B

FIG. 5B

2(5,6A)

12A
12B
12C

FIG. 5C

FIG. 6A

FIG. 6B

FIG. 7A

FIG. 7B

PRESSURE FORCE BY GRIPPING GRIP

12

6A

5

2

PRESSURE FORCE BY GRIPPING GRIP

FIG. 8A

SEPARATION
AT INTERFACE

PRESSURE FORCE BY GRIPPING GRIP

12

6A

5

2

T

T

PRESSURE FORCE BY GRIPPING GRIP

FIG. 8B

TENSION
DIRECTION

23

21

22

6A

5

FIG. 9

# EP 3 451 037 A1

## INTERNATIONAL SEARCH REPORT

<table>
<tr><td>International application No.</td></tr>
<tr><td>PCT/JP2017/005505</td></tr>
</table>

A. CLASSIFICATION OF SUBJECT MATTER
*G02B6/46(2006.01)i, G02B6/44(2006.01)i, G02B6/48(2006.01)i*

According to International Patent Classification (IPC) or to both national classification and IPC

B. FIELDS SEARCHED

Minimum documentation searched (classification system followed by classification symbols)
G02B6/44-6/54, H02G7/00-7/22, H01B11/22

Documentation searched other than minimum documentation to the extent that such documents are included in the fields searched
Jitsuyo Shinan Koho      1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-029110 A  (Fujikura Ltd.),<br>29 January 2003 (29.01.2003),<br>paragraphs [0007] to [0009], [0014]<br>(Family: none) | 1,3,6,8<br>2,4-5,7,9 |
| Y | JP 2007-148121 A  (Sumitomo (SEI) Steel Wire Corp.),<br>14 June 2007 (14.06.2007),<br>paragraphs [0038] to [0040], [0069]; fig. 5<br>(Family: none) | 2 |
| Y | JP 08-265941 A  (Kabushiki Kaisha PLP),<br>11 October 1996 (11.10.1996),<br>paragraph [0005]<br>(Family: none) | 4 |

☒ Further documents are listed in the continuation of Box C.     ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>27 March 2017 (27.03.17) | Date of mailing of the international search report<br>11 April 2017 (11.04.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

19

**INTERNATIONAL SEARCH REPORT**

| International application No. |
|---|
| PCT/JP2017/005505 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 011083/1991(Laid-open No. 132720/1992) (Nihon Taiyo Kaitei Densen Kabushiki Kaisha), 09 December 1992 (09.12.1992), paragraphs [0010] to [0011] (Family: none) | 5,7 |
| Y | JP 2001-328189 A (Ube-Nitto Kasei Co., Ltd.), 27 November 2001 (27.11.2001), paragraphs [0011], [0029], [0032] (Family: none) | 9 |
| A | JP 2003-090943 A (Fujikura Ltd.), 28 March 2003 (28.03.2003), claim 1; fig. 3 (Family: none) | 1-9 |
| A | Microfilm of the specification and drawings annexed to the request of Japanese Utility Model Application No. 191818/1982(Laid-open No. 095304/1984) (Tohoku Electric Power Co., Inc.), 28 June 1984 (28.06.1984), page 3, line 17 to page 4, line 3; fig. 5 & US 4662712 A column 1, lines 52 to 61 & AU 2247883 A & CA 1250463 A | 1-9 |
| A | US 5043037 A (Eric L. BUCKLAND), 27 August 1991 (27.08.1991), fig. 1, 3 (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014219494 A

- JP 2000041325 A